(19) Europäisches Patentamt
European Patent Office
Office européen des brevets

(11) Veröffentlichungsnummer: **0 360 062 A2**

# (12) EUROPÄISCHE PATENTANMELDUNG

(21) Anmeldenummer: 89116258.8

(22) Anmeldetag: 02.09.89

(51) Int. Cl.5: C08G 69/46 , C08G 69/16 , C08G 69/30 , C08G 69/36

(30) Priorität: 17.09.88 DE 3831708

(43) Veröffentlichungstag der Anmeldung: 28.03.90 Patentblatt 90/13

(84) Benannte Vertragsstaaten: DE FR GB IT NL

(71) Anmelder: BAYER AG
D-5090 Leverkusen 1 Bayerwerk(DE)

(72) Erfinder: Heinz, Hans-Detlef, Dr.
Breslauer Strasse 31
D-4150 Krefeld 11(DE)
Erfinder: Meyer, Rolf-Volker, Dr.
Buchheimer Strasse 23
D-4150 Krefeld(DE)

## (54) Verfahren zur Herstellung von verzweigten (Co)Polyamiden durch Festphasen-Nachkondensation und entsprechende (Co)Polyamide.

(57) Die Erfindung betrifft ein Verfahren zur Festphasen-Nachkondensatian von (Co)Polyamiden, welche geringe Mengen an Lysin-Komponenten und dazu etwa äquivalente Mengen einer Polycarbonsäure eingebaut enthalten. Es werden in verkürzter Reaktionszeit thermoplastisch verformbare, leicht verzweigte, aliphatische (Co)-Polyamide mit erhöhter Schmelzviskosität und ausgeprägter Strukturviskosität erhalten. Die Erfindung beinhaltet ferner Festphasen-nachkondensierte (Co)Polyamide nach dem beanspruchten Verfahren.

EP 0 360 062 A2

## Verfahren zur Herstellung von verzweigten (Co)Polyamiden durch Festphasen-Nachkondensation und entsprechende (Co)Polyamide

Die Erfindung betrifft ein Verfahren zur Festphasen-Nachkondensation von (Co)Polyamiden, welche geringe Mengen an Lysin-Komponenten und dazu etwa äquivalente Mengen einer Polycarbonsäure eingebaut enthalten. Es werden in verkürzter Reaktionszeit thermoplastisch verformbare, leicht verzweigte, aliphatische (Co)Polyamide mit erhöhter Schmelzviskosität und ausgeprägter Strukturviskosität erhalten. Die Erfindung beinhaltet ferner Festphasen-nachkondensierte (Co)Polyamide nach dem beanspruchten Verfahren.

Polyamide sind eine seit vielen Jahren für eine Vielzahl praktischer Anwendungen bewährte Klasse von Polymeren, die nach verschiedenen Verfahren hergestellt, aus sehr unterschiedlichen Polyamid-bildenden Bausteinen synthetisiert und die im speziellen Anwendungsfall, allein oder auch in Kombination mit z.B. Verarbeitungshilfsmitteln, Stabilisatoren, polymeren Legierungspartnern oder auch mineralischen Verstärkungsmaterialien (wie z.B. Füllstoffen oder Glasfasern), zu Werkstoffen mit speziell eingestellten Eigenschaftskombinationen ausgerüstet werden konnen.

So setzt man Polyamide in großen Mengen zur Herstellung von Fasern, Kunststoff-Formteilen und Folien, aber auch z.B. als Schmelzkleber und Hilfsmittel in einer Vielzahl von Anwendungen technisch ein.

Während Lactame kationisch, hydrolytisch (mit Wasserzusatz) oder auch anionisch zu Polyamiden umgewandelt werden können, kommt für die Polyamid-Herstellung aus polyamidbildenden Monomeren wie Diaminen, Dicarbonsäuren bzw. geeigneten Derivaten und Aminocarbonsäuren, auch in Kombination mit Lactamen, im wesentlichen nur die Polykondensationsreaktion in Frage (siehe Vieweg, Müller; Kunststoff-Handbuch, Bd. VI, S. 11 ff, Carl-Hanser-Verlag, München 1966).

Auch bei der Herstellung von Polyamiden aus Lactamen, z.B. von Polyamid-6 aus $\epsilon$-Caprolactam, hat die "hydrolytische Polymerisation/Polykondensation" die größte Bedeutung.
In dieser Anmeldung sollen unter "Schmelzpolykondensation" beide Verfahren verstanden werden.

Zur Herstellung der Polyamide sind eine Vielzahl von Verfahrensweisen bekannt geworden, wobei, je nach gewünschtem Endprodukt, unterschiedliche Monomerbausteine zur Bestimmung der Matrixnatur, verschiedene Kettenregler zur Einstellung eines angestrebten mittleren Molgewichts oder auch Monomere mit "reaktiven" Gruppen für später beabsichtigte Nachbehandlungen (z.B. Aminogruppen oder Sulfonatgruppen zur besseren Anfärbbarkeit von Fasern mit sauren bzw. basischen Farbstoffen) eingesetzt werden.

Kontinuierliche Herstellungsverfahren sind ebenso bekannt wie die diskontinuierliche Produktion, z.B. in Autoklaven.

Allen Methoden zur Herstellung von (Co)polyamiden durch Polykondensation bzw. durch hydrolytische Polymerisation der Lactame ist jedoch gemeinsam, daß, ausgehend von geeigneten Monomermischungen, die Herstellung der (Co)polyamide viele Stunden Reaktionszeit in Anspruch nimmt, bis die Polyamide zum Abspinnen von Strängen aus der Polymerschmelze ausreichend hohe Molgewichte erreichen bzw. die Molgewichte für den geplanten Praxiseinsatz ausreichend hoch sind.

Unabhängig von der langen Reaktionszeit ist in vielen Fällen noch eine Nachkondensation - z.B. in der Festphase - erforderlich, um noch größere Molgewichte zu erzielen. Auch diese Festphasennachkondensation erfordert i.a. beachtliche Verweilzeiten bei hohen Temperaturen, wobei Produkte mit besonders hoher Schmelzviskosität, wie sie für viele Extrusionsanwendungen gewünscht werden, besonders hohe Verweilzeiten benötigen aufgrund der mit steigendem Molekulargewicht sinkenden Reaktionsgeschwindigkeit.

Die zur Herstellung der üblichen (Co)Polyamide erforderlichen Reaktionszeiten, begrenzen somit gravierend die Kapazität der Herstellanlagen.

Eine wesentliche Verkürzung der Reaktionszeiten bei der Herstellung von sehr hochmolekularen (Co)-Polyamiden mit hoher Schmelzviskosität - ohne Verzicht auf die bekannten guten anwendungstechnischen Eigenschaften der Produkte - wäre somit als großer, insbesondere kostensparender Fortschritt anzusehen.

Überraschend wurde nun gefunden, daß die Festphasen-Nachkondensationszeiten zur Herstellung von Polyamiden aus Lactamen und/oder Diamin/Dicarbonsäure-Mischungen bzw. den entsprechenden Nylon-Salzen bzw. geeigneten Derivaten und/oder Aminocarbonsäuren bzw. geeigneten Derivaten deutlich verkürzt werden können, wenn den polyamidbildenden Ausgangsstoffen geringe Mengen Lysin-Komponenten und zu Lysin etwa äquivalente Mengen einer Polycarbonsäure, vorzugsweise Dicarbonsäure, zugesetzt werden.

Gegenstand der Erfindung ist daher ein Verfahren zur Herstellung von (Co)Polyamiden mit hohen Schmelzviskositäten, aus Lactamen und/oder Diamin/Dicarbonsäure-Mischungen bzw. ihren Salzen und/oder geeigneten Derivaten derselben und/oder Aminocarbonsäuren bzw. geeigneten Derivaten derselben durch Festphasen-Nachkondensation, dadurch gekennzeichnet, daß (Co)Polyamide eingesetzt werden,

welche 0,1 bis 2,0 Gew.-%, vorzugsweise 0,2 bis 1,0 Gew.-%, insbesondere 0,3 bis 0,9 Gew.-% an Lysin-Segmenten

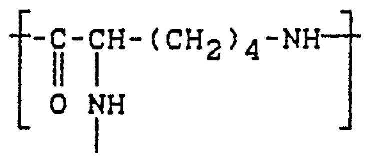

und dazu in etwa äquivalente Mengen an Polycarbonsäure-Segmenten enthalten, und die zur Festphasen-Nachkondensation bei 140 bis 250 °C, vorzugsweise 160 bis 230 °C, immer jedoch mindestens 10 °C, bevorzugt mindestens 20 °C unterhalb des jeweiligen Schmelzpunktes des (Co)Polyamids, im Vakuum oder in einem Inertgas, 0,5 bis 30 Stunden, vorzugsweise 1 bis maximal 20 Stunden, erhitzt werden.

Gegenstand der Erfindung sind auch die so erhältlichen Lysin/Polycarbonsäure-modifizierten (Co)-Polyamide sowie daraus hergestellte Formkörper.

Es sind viele Versuche beschrieben worden, durch Cokondensation mit basische Gruppen enthaltenden, polyamidbildenden Bausteinen basische Polyamide zu erhalten, die insbesondere bei Einsatz als Fasern mit sauren Farbstoffen leichter anfärbbar sind. So wird in US 3 651 023 z.B. offenbart, daß mit einer Reihe von verschiedenen derartigen Zusatzstoffen eine verbesserte Anfärbbarkeit von Polyamidfasern und eine höhere Farbintensität erreichbar ist.

Als eines von mehreren Beispielen zu verwendender Zusatzstoffe wird in der genannten Anmeldung auch Lysin genannt, wobei die in den aufgeführten Beispielen 1, 2 und 9 bis 12 beschriebenen Polyamide sich von den anderen, von der verbesserten Anfärbbarkeit abgesehen, nicht charakteristisch unterscheiden. Insbesondere lassen die Beispiele erkennen, daß der Zusatz von Lysin allein bzw. in Kombination mit einer Monocarbonsäure keinerlei Verkürzung der Reaktionszeit erlaubt. Ein Hinweis auf die Verwendung von Lysinhydrochloriden fehlt völlig.

Die für das erfindungsgemäße Festphasen-Nachkondensationsverfahren geeigneten (Co)Polyamide unter Einbau von Lysin-Segmenten können nach verschiedenen Methoden hergestellt werden.

So wird in der japanischen Auslegeschrift 12 139/64 die Verwendung von gesondert hergestellten Salzen aus Lysin und aliphatischen $C_2$-$C_{10}$-Dicarbonsäuren bei der Schmelze-Polykondensation von Polyamiden offenbart. Die Lysinsalze werden in einer Menge von 0,5 bis 5 Gew.-%, bevorzugt 1,0 bis 3 Gew.-% zugesetzt.

Die JA 12 139/64 enthält keinerlei Hinweise auf einen Einfluß der dort beschriebenen Maßnahme auf die Nachkondensierbarkeit der Produkte.

Ein verbessertes Verfahren der Herstellung der Lysin-Segmente enthaltenden (Co)Polyamide wird in der gleichzeitig eingereichten Patentanmeldung Le A 26 336 (P 3 831 709) beansprucht.

Dort werden anstelle der vorgebildeten Lysin/Dicarbonsäuresalze Lysin-Komponenten und Polycarbonsäuren ohne vorherige Salzbildung dem polyamidbildenden Reaktionszusatz vor oder zu Beginn der Reaktion, gegebenenfalls stufenweise, zugesetzt. Es wird dabei mit geringen Mengen bereits eine schnelle Polykondensationsreaktion zum (Co)Polyamid erzielt; diese (Co)Polyamide lassen sich nach der erfindungsgemäß beanspruchten Festphasen-Nachkondensation hervorragend zu verzweigten, sehr hochmolekularen, hohe Schmelzviskositäten und Strukturviskositäten aufweisenden (Co)Polyamiden in schneller Reaktionszeit aufbauen.

In der obengenannten Anmeldung wird auch die Herstellungsweise von Lysin-Segmenten enthaltenden (Co)Polyamiden der erfindungsgemäß einzusetzenden Art beschrieben, welche darauf beruht, daß man Lysin- oder Lysinester-mono- oder -di-Hydrochloride und etwa äquivalente Mengen (d.h. HCl-bindende Mengen) an anorganischen Basen (wie NaOH, KOH, $NaHCO_3$, $Na_2CO_3$, $KHCO_3$ oder $K_2CO_3$) dem Polyamid-Schmelzkondensationsansatz zufügt.

Polyamid-Ausgangsmaterialien:

Als Lactame im Sinne der Erfindung sind ω-Lactame mit 5 bis 13 C-Ringgliedern wie z.B. ε-Caprolactam, Önanthlactam, Capryllactam und Laurinlactam allein oder im Gemisch geeignet, vorzusweise ε-Caprolactam und Laurinlactam. Besonders bevorzugt wird ε-Caprolactam eingesetzt.

Geeignete Diamine sind z.B. $C_2$-$C_{20}$-Alkylendiamin wie Tetramethylendiamin, Hexamethylendiamin, Dodecamethylendiamin u.a.m. und Cycloalkylendiamine wie 1,4-Diaminocyclohexan, Bis-(4-aminocyclohexyl)-methan, 5-Amino-1-aminomethyl-1,3,3-trimethylcyclohexan (Isophorondiamin) und die weiteren zur Polyamid-Herstellung bekannten Diamine, wie sie im Stand der Technik einzeln oder im Gemisch bekannt sind.

Geeignete Dicarbonsäuren sind aliphatische $C_2$-$C_{38}$-Dicarbonsäuren wie z.B. Adipinsäure, Azelainsäure, dimerisierte Fettsäuren und aromatische $C_6$-$C_{14}$-Dicarbonsäuren wie z.B. Isophthalsäure, Terephthalsäure u.a. sowie Cycloalkylendicarbonsäuren wie z.B. 1,3, 1,4-Cyclohexandicarbonsäure oder Mischungen daraus. Anstelle der Dicarbonsäuren selbst in den Diamin-Dicarbonsäure-Mischungen können u.U. auch geeignete Derivate wie z.B. Ester eingesetzt werden.

Die zusammen mit den Lysin-Komponenten in annähernd äquivalenten Mengen einzusetzenden Polycarbonsäuren werden ebenfalls aus den genannten Polycarbonsäuren ausgewählt. Bevorzugt sind höhere Alkylen-Dicarbonsäuren mit ≧ 6 C-Atomen wie Dodecansäure, Dimerfettsäuren, cycloaliphatische Dicarbonsäuren wie 1,3- oder 1,4-Cyclohexandicarbonsäuren oder (weniger bevorzugt) aromatische Dicarbonsäuren wie Isophthalsäure oder Terephthalsäure. Es können aber auch höherfunktionelle Polycarbonsäuren oder ihre Anhydride eingesetzt werden.

Geeignete Aminosäuren zur Herstellung der Polyamide sind z.B. $\omega$-$C_4$-$C_{18}$-Aminocarbonsäuren wie z.B. Aminocapronsäure, Aminoundecansäure und Aminoheptansäure.

Bevorzugte Diamine sind Hexamethylendiamin, Tetramethylendiamin und Dodecamethylendiamin.

Bevorzugte Dicarbonsäuren sind Adipinsäure, Azelainsäure, Sebacinsaure, Decamethylendicarbonsäure und Dimerfettsäuren.

Bevorzugte Aminocarbonsäuren sind Aminocapronsäure und Aminoundecansäure.

Bevorzugte Diamin/Dicarbonsäure-Mischungen bzw. Nylon-Salze sind solche aus Hexamethylendiamin und Adipinsäure bzw. Sebacinsäure bzw. Azelainsäure, solche aus Tetramethylendiamin und Adipinsäure sowie solche aus Dodecamethylendiamin und Decamethylendicarbonsäure.

Die Polyamid-Bausteine können in praktisch beliebigen Gemischen eingesetzt werden; bevorzugt sind allerdings aliphatische Polyamide bzw. solche, die nur einen untergeordneten Gehalt (< 40 Gew.-%) an aromatischen Einheiten enthalten.

Lysin-Komponenten:

Neben Lysin (2,6-Diamino-hexansäure) selbst können auch Lysinhydrat oder Ester niederer ($C_1$-$C_4$-)Alkohole wie z.B. Lysinmethylester eingesetzt werden. Bevorzugt werden Lysinhydrat bzw. wäßrige Lösungen von Lysin eingesetzt, wobei Lysin in beliebigen enantiomeren Formen oder Mischungen derselben verwendet werden kann.

Es können auch sowohl die einzelnen enantiomeren Lysinmono-oder -dihydrochloride (D- bzw. L.Form) als auch beliebige Gemische, einschließlich des Racemats, eingesetzt werden. Auch Lysinestermonohydrochloride und Lysinester-di-hydrochloride können erfindungsgemäß eingesetzt werden. Bei Dihydrochloriden müssen dann 2 Äquivalente der anorganischen Base eingesetzt werden. Als Alkoholkomponente in Lysinestermono- und -dihydrochloriden sind insbesondere niedrig siedende Alkohole wie Methanol und Ethanol geeignet. Bevorzugte Lysinhydrochloride sind das L-Lysindihydrochlorid, das DL-Lysinmonohydrochlorid sowie das L-Lysinmonohydrochlorid. Besonders bevorzugt ist das L-Lysinmonohydrochlorid.

L-Lysinmonohydrochlorid wird großtechnisch durch z.B. Fermentationsprozesse hergestellt (s. Ullmanns Encyclopädie der technischen Chemie, 4. neu bearbeitete und erweiterte Auflage, Bd. 7, Verlag Chemie, Weinheim/Bergstraße, 1974).

Als anorganische Basen sind z.B. Oxide, Hydroxide und Carbonate verschiedener Metalle geeignet, z.B. Natriumhydroxid, Kaliumhydroxid, Natriumcarbonat, Kaliumcarbonat, Natriumbicarbonat oder Kaliumbicarbonat, Magnesiumhydroxid, Magnesiumcarbonat, Calciumhydroxid, Natriumoxid, Kupferhydroxid, Kupfercarbonat, Calciumcarbonat, Manganhydroxid, Mangancarbonat u.a.

Bevorzugte anorganische Basen sind Natriumhydroxid, Kaliumhydroxid, Natriumcarbonat und Kaliumcarbonat. Besonders bevorzugt werden Natrium- und Kaliumhydroxid eingesetzt.

Die Zugabe der Lysin/Polycarbonsäure/gegebenenfalls Basen erfolgt getrennt oder gemeinsam, in jedem Fall vorteilhaft aber vor oder zu Beginn der Polykondensation.

Die Lysin-Komponenten werden in solchen Anteilen in den (Co)Polyamiden verwendet, daß ihr Lysin-Segmentanteil im (Co)Polyamid 0,1 bis 2,0 Gew.-%, vorzugsweise 0,2 bis 1,0, insbesondere 0,3 bis 0,9 Gew.-% beträgt. Die Mengen an Polycarbonsäure bzw. anorganischer Base sind in etwa äquivalent, d.h. es werden an anorganischer Base der HCl-Menge etwa äquivalente Mengen und bei Polycarbonsäuren die der zweiten Aminogruppe in Lysin etwa äquivalente Mengen an COOH-Gruppen aus den Polycarbonsäuren eingesetzt.

Bei der Polykondensation bilden sich die Lysin-Segmente

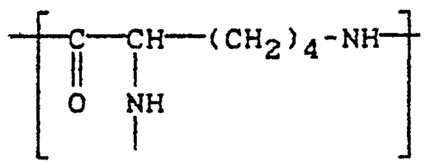

und die PolycarbonsäureSegmente, vorzugsweise Dicarbonsäuresegmente

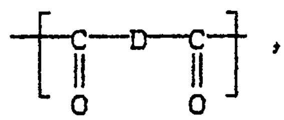

wobei D der Rest der Dicarbonsäure ohne die Carboxylgruppen ist.

Die Polykondensation kann kontinuierlich oder diskontinuierlich erfolgen.

Den Polyamiden können auch Stabilisatoren wie z.B. Metallsalze (Kupfer I/Mangan II-Salze) und sterisch gehinderte Phenole oder Amine oder andere bekannte, stabilisierend wirkende Verbindungen oder beliebige, aus dem Stand der Technik in großer Zahl bekannte Schlagzähmodifikatoren zugemischt werden.

Weiterhin können Additive wie Nucleierungsmittel, Pigmente, Farbstoffe, Ruß, Gleitmittel und andere Füllmittel auch Kaolin oder Glasfasern enthalten sein.

Entsprechend der Erfindung werden die Lysin-modifizierten Polyamide der Festphasen-Nachkondensationsreaktion unterworfen, wobei (Co)Polyamid auf Basis PA 6 und 66 bzw. 6/66- und 4/6 bevorzugt sind.

Dazu wird PA-Granulat in einem Temperaturbereich von 140 bis 250 °C, bevorzugt 160 bis 230 °C, immer jedoch mindestens 10 °C, bevorzugt mindestens 20 °C unterhalb der Schmelztemperatur des jeweiligen (Co)Polyamids, im Vakuum oder unter einem Inertgas für eine gewünschte Zeit erhitzt. Je höher die Zeit gewählt wird, desto höher die erreichten Molekulargewichte.

Die Festphasennachkondensation kann diskontinuierlich, z.B. im Taumeltrockner oder Wendelmischer, und kontinuierlich erfolgen. Bevorzugt wird als Inertgas $N_2$ verwendet.

Die Nachkondensationszeiten werden zweckmäßig im Bereich von 0,5 bis 30 h, bevorzugt 1,0 bis 20 h gewählt, wobei die größeren Reaktionszeiten bevorzugt bei niedrigeren Temperaturen und umgekehrt angewendet werden. Auf diese Weise sind Produkte mit sehr hoher Schmelzviskosität herstellbar, welche ebenfalls Gegenstand der Erfindung sind. Diese Typen sind besonders für den Einsatz im Extrusionsbereich geeignet.

Besonders bevorzugte (Co)Polyamide sind solche auf Basis Polyamid-6 bzw. solche Polyamide, die reich an Caprolactam-Einheiten sind.

Die erfindungsgemäß erhaltenen Polyamide weisen im Vergleich zu bekannten Vergleichsprodukten bei vergleichbarer Lösungsviskosität ($\eta_{rel}$, 1 %ig in m-Kresol bei 25 °C) charakteristisch höhere Schmelzviskositäten auf und zeigen zumeist eine ausgeprägte Strukturviskosität. Dieses rheologische Verhalten läßt auf eine leicht verzweigte Struktur schließen.

Produkte mit sehr hoher Schmelzviskosität sind insbesondere solche, die Schmelzviskositäten >1200 Pa.s/270 °C bei einem Schergefälle von ca. 1 $sec^{-1}$ aufweisen. Sie sind insbesondere für den Extrusions- und Blasverformungsbereich geeignet.

Die teilverzweigten (Co)Polyamide, hergestellt nach dem erfindungsgemäßen Festphasen-Nachkondensations-Verfahren können für alle Bereiche, in denen Polyamide üblicherweise angewendet werden, eingesetzt werden, z.B. für den Spritzguß, Extusion, Blasverformung, die Herstellung von Fasern sowie Folien und anderen Gegenständen. Sie weisen im wesentlichen ein vergleichbares Eigenschaftsbild auf wie Vergleichsprodukte, eignen sich aber für einige Verarbeitungszwecke besser und sind ökonomischer und schneller herstellbar. Die erfindungsgemäßen (Co)Polyamide werden insbesondere in Extrusions- und Blasverformungvsverfahren zur Herstellung von Formkörpern, Folien, Verbundfolien, Schläuchen, Rohren, Halbzeug und Gewebeteilen, verwendet.

Die nachfolgenden Beispiele erläutern die Erfindung, ohne sie darauf einzuschränken.

Beispiel 1 (Vorstufe)

10 kg Caprolactam, 1 kg Wasser, 71,3 g L-Lysinmonohydrochlorid, 27 g Adipinsäure und 15,6 g NaOH wurden in einen 25 l-Autoklaven eingewogen und nach Inertisierung unter Eigendruck für 1 h auf 200 °C erhitzt. Anschließend wurde auf Atmosphärendruck entspannt und gleichzeitig auf 270 °C aufgeheizt. Der Aufbau der Schmelzviskosität wurde über die Drehzahl eines mit konstanter Kraft laufenden Rührwerks bestimmt. Nach ca. 1,5 h bei 270 °C war die gewünschte Schmelzviskosität erreicht. Der Rührer wurde ausgeschaltet, das Polyamid eine Stunde absitzen lassen und dann mit $N_2$ aus dem Kessel gedrückt. Über ein Wasserbad wurden die Stränge einer Häckselmaschine zugeführt, mit $H_2O$ extrahiert und getrocknet. Das Produkt besaß eine relative Viskosität von 2,9.

Ohne Beschleuniger wird in einem Vergleichsversuch bis zum Erreichen derselben Schmelzviskosität in etwa die doppelte Zeit bei 270 °C benötigt.

Beispiel 2 (erfindungsgemäße Nachkondensation)

Ca. 50 g des nach Beispiel 1 erhaltenen PA 6-Granulats wurden bei 170 °C in einem Stickstoffstrom von 40 l $h^{-1}$ bei 50 U/$min^{-1}$ in einem Rotationsverdampfer 7 h lang nachkondensiert. Die Ergebnisse sind in Tabelle 1 zusammengestellt.

Vergleichsbeispiel 1

In derselben Weise wie in Beispiel 2 wurde nicht modifiziertes PA 6-Granulat derselben Lösungsviskosität nachkondensiert. Die Daten sind in Tabelle 1 zusammengestellt.

Tabelle 1

| Beispiel | Nachkondensationszeit bei 170 °C (in Stunden) | $\eta_{rel}$ | SV bei 250 °C[1] (Pas) |
|---|---|---|---|
| 2 | 7 | 3,2 | 1325 |
| Ausgangsmaterial ( = Bsp. 1) | keine | 2,9 | 300 |
| Vergleich 1 | 7 | 3,2 | ca. 480 |
| Ausgangsmaterial zu Vergleich 1 | keine | 2,9 | ca. 190 |

[1] Schergefälle 1 $s^{-1}$ SV = Schmelzviskosität

Wie die Beispiele zeigen, kann durch Einsatz der erfindungsgemäßen Beschleunigerkombination die Reaktionszeit bis zum Erreichen einer gewünschten Schmelzviskosität deutlich reduziert werden bzw. können in derselben Zeit Produkte mit höherer Schmelzviskosität hergestellt werden.

Beispiel 3

a) Vorstufe:

92,5g ε-Caprolactam, 9,4 g Aminocapronsäure, 0,66 g Lysinhydrat und 0,38 g Azelainsäure wurden in einen 250 ml Rundkolben eingewogen. Nach Inertisierung mit $N_2$ wird unter Rühren auf 200 °C aufgeheizt und 1h bei dieser Temperatur gehalten. Anschließend wird auf 270 °C aufgeheizt und unter langsamem Rühren 70 Minuten polykondensiert. Der Kolben wurde abgenommen, nach Erkalten des Polymeren zerschlagen und anschließend das Polymere gehäckselt und mit $H_2O$ extrahiert. Der $\eta_{rel}$ Wert beträgt 2,8 (siehe Tabelle 2).

b) Festphasen-Nachkondensation:

Das gehäckselte (Co)Polyamid nach Beispiel 3a) wird in einem rotierenden Rundkolben (50 Upm) bei 170 °C in $N_2$-Strom (40 l $N_2$/h) 3 und 7 Stunden lang nachkondensiert (Ergebnisse siehe Tabelle 2).

Vergleichsbeispiel 2

In derselben Weise wurde Polyamid 6-Granulat einer relativen Viskosität von 2,9, welches nicht Lysin-modifiziert war, 7h lang nachkondensiert.

Die Daten sind der Tabelle 2 zu entnehmen.

Tabelle 2

| Beispiel Nr. | Festphasen-Nachkondensation bei 170 °C in Stunden | $\eta_{rel}$ | SV (250 °C, 1 $s^{-1}$) |
|---|---|---|---|
| nach Beispiel 3)* | 0 | 2,8 | ca. 400 |
| | 3 | 3,3 | 1700 |
| | 7 | 3,9 | 2900 |
| Ausgangsmaterial | 0 | 2,9 | ca. 190 |
| Vergleich | 7 | 3,2 | ca. 480 |

Wie die Beispiele zeigen, führt die Verwendung der Lysin(derivate)/Polycarbonsäuren modifizierten Polyamide in wesentlich geringerer Zeit als mit nichtmodifizierten Proben zu hochmolekularen Polyamiden, wobei die Festphasen-Nachkondensation deutlich beschleunigt ist.

**Ansprüche**

1. Verfahren zur Herstellung von (Co)polyamiden durch Schmelze-Polykondensation aus Lactamen und/oder Diamin/Dicarbonsäure-Mischungen oder ihren -Salzen und/oder geeigneten Derivaten und/oder Aminocarbonsäuren und ihren geeigneten Derivaten, und anschließende Festphasen-Nachkondensation, dadurch gekennzeichnet, daß Polyamide eingesetzt werden, welche 0,1 bis 2,0 Gew.-%, insbesondere 0,3 bis 0,9 Gew.-%, an Lysin-Segmenten

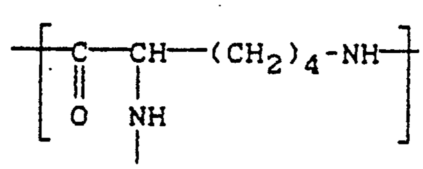

und dazu etwa äquivalente Mengen an Polycarbonsäure-Segmenten enthalten und zur diskontinuierlichen oder kontinuierlichen Nachkondensation das (Co)Polyamid bei 140 bis 250 °C, vorzugsweise 160 bis 230 °C, immer jedoch mindestens 10 °C, bevorzugt 20 °C, unter dem Schmelzpunkt des (Co)Polyamids, im Vakuum oder unter einem Inertgas, 0,5 bis 30 Stunden, vorzugsweise 1 bis 20 Stunden, erhitzt werden.

2. Teilverzweigte (Co)Polyamide, hergestellt nach Verfahren gemäß Anspruch 1, mit einer Schmelzviskosität ≥1200 Pa.s/270 °C bei 1 $sec^{-1}$ Schergefälle.

3. Verwendung der Polyamide nach Anspruch 2 zur Herstellung von Formkörpern, Fasern und Folien, insbesondere nach Extrusions- und Blasverformungsverfahren.